# EUROPEAN PATENT SPECIFICATION

(11) **EP 3 029 423 B1**
(45) Date of publication and mention of the grant of the patent: **28.03.2018**
(21) Application number: 14196507.9
(22) Date of filing: 05.12.2014
(51) Int. Cl.: G01D 3/08, G01D 5/14

(54) **Multi-tier limit-angle protection device.**
Mehrschichtige Begrenzungswinkelschutzvorrichtung
Dispositif de protection à angle limite multiniveau

(43) Date of publication of application: 08.06.2016
(73) Proprietor: National Chung Shan Institute of Science and Technology, Taoyuan Country 325 (TW)
(72) Inventor: Wu, Ruh-Hua, 325 Longtan Township, Taoyuan County (TW); Chang, Chung-Tseng, 334 Bade City, Taoyuan County (TW)
(74) Representative: Perani & Partners S.p.A.

(56) References cited:
- EP-A1- 2 784 450
- US-A- 4 874 053
- US-A1- 2004 017 187
- US-A1- 2006 149 496
- US-A1- 2006 267 725

## Description

### FIELD OF THE INVENTION

The present invention relates to multi-tier limit-angle protection devices, and more particularly, to a limit-angle protection device for use with a rotation mechanism with limited stroke to prevent a driven apparatus from suffering damage which might otherwise happen if the angle of rotation of the mechanism exceeds the limit.

### BACKGROUND OF THE INVENTION

A rotation mechanism with limited stroke usually operates in conjunction with a limit-angle protection device to prevent a driven apparatus from suffering damage which might otherwise happen if the angle of rotation of the mechanism exceeds the limit. Although a conventional mechanical stopper puts a restraint on the angle of rotation of the mechanism, it is incapable of protective power interruption, thereby causing damage to the mechanism or overloading the device under an overly large driving force.

A conventional limit switch applies to the installation of a rotation mechanism. Once it approaches an angular limit, the rotation mechanism will trigger a lever of the limit switch in breaking the circuit of the rotation mechanism such that the rotation mechanism will stop operating. In general, the modes in which the limit switch operates come in various forms, including a mechanical mode, an electromagnetic code, and an optical mode. Regardless of which mode the limit switch is operating, the limit switch must operate in conjunction with the rotation mechanism, or, to be specific, must come into contact with the rotation mechanism in order to trigger the lever of the limit switch as soon as the rotation mechanism attains a rotational limit-angle.

US20040017187 discloses a sensor of rotational or linear displacement. The sensor comprises magnetic blocks and a magnetic field detection circuit, wherein the angular or linear displacement is determined in accordance with a sinusoidal wave generated from two linear Hall elements (LHE), and the sinusoidal wave features a phase difference of 90 degrees. However, US20040017187 also discloses that the magnetic blocks take on a special shape in order for the linear Hall elements to produce a magnetic field which manifests a position-dependent linear relationship. But the special shape of the magnetic blocks has the following disadvantages: since the journey of the displacement of the magnetic blocks correlates with the size of the magnetic blocks, given a constant installation space, the larger the magnetic blocks, the less the remaining displacement; to achieve a relatively large range of motion, the required volume of the device must increase; what is more, US20040017187 discloses just a single limit-angle surveillance mechanism and thus still has room for improvement in security.

Document EP 2 784 450 A1 defines a related limit-angle detection device that is adapted to detect a rotation angle about a rotation axis of a driving apparatus to thereby control operation of a driving motor of the driving apparatus

### SUMMARY OF THE INVENTION

It is an objective of the present invention to replace a conventional contact-based limit switch with a non-contact magnetic induction mechanism so as to preclude complexity in mechanism design.

Another objective of the present invention is to adjust limit-angle by software so as to preclude any problem with an intricate loop.

Yet another objective of the present invention is to provide a sophisticated limit-angle protection mechanism capable of carrying out at least two protection processes so as to provide secure and stable protection.

In order to achieve the above and other objectives, the present invention provides a multi-tier limit-angle protection device, adapted to detect a rotation angle about a rotation axis of a driving apparatus to thereby control operation of a driving motor of the driving apparatus, the multi-tier limit-angle protection device comprising: a first-axis potentiometer comprising two magnetic sensing elements and a first magnetic block, with the two magnetic sensing elements spaced apart by a first predefined angle centered at a first axis of the driving apparatus, wherein a direction of magnetization of the first magnetic block is perpendicular to the first axis so as for a first-axis sensing signal to be generated in accordance with an output of a variation in a strength of magnetic field induction of the first magnetic block relative to the first-axis potentiometer; a first-axis limit-angle detecting module comprising two magnetic sensing elements, two switch circuits, and three second magnetic blocks, with the second magnetic blocks disposed at positive and negative limit angles and the zero point of the first-axis rotation angle of the driving apparatus, respectively, wherein the two magnetic sensing elements connected to the digital switch circuits are disposed at the positive and negative limit angles, respectively, so as to output a plurality of first-axis confirming signals in accordance with magnetic field induction of the second magnetic blocks; and a controller connected to the first-axis potentiometer, the first-axis limit-angle detecting module, and the driving apparatus and adapted to receive the first-axis sensing signal so as to determine a rotation angle about the first axis of the driving apparatus, such that operation of a first-axis driving motor of the driving apparatus stops as soon as the rotation angle about the first axis exceeds a limit angle, wherein the controller receives the first-axis confirming signals, such that the rotation angle about the first axis is determined, and a negative determination causes the first-axis driving motor of the driving apparatus to stop operating, wherein, from the perspective of the magnetic sensing element-facing sides of the second magnetic blocks, one of the second magnetic blocks is disposed at the zero point of the rotation angle, whereas the other two second magnetic blocks are disposed at the positive and negative limit-angles of the rotation angle, respectively, and have opposite magnetic poles facing the magnetic sensing elements.

In order to achieve the above and other objectives, the present invention further provides a multi-tier limit-angle protection device, wherein an output of two switch circuits of the first-axis limit-angle detecting module is connected to the first-axis driving motor, wherein a limit angle of the first axis of the driving apparatus is less than 180 degrees, wherein the first-axis driving motor stops operating because a voltage level variation arises from the first-axis confirming signal when the rotation angle about the first axis exceeds a limit angle.

In an embodiment of the present invention, the multi-tier limit-angle protection device further comprises a second-axis potentiometer and a second-axis limit-angle detecting module. The controller is connected to the second-axis potentiometer, the second-axis limit-angle detecting module, and the driving apparatus. The controller receives the second-axis sensing signal so as to determine a rotation angle about the second axis of the driving apparatus, such that operation of a second-axis driving motor of the driving apparatus stops as soon as the rotation angle about the second axis exceeds a limit angle, wherein the controller receives the second-axis confirming signals, such that the rotation angle about the second axis is determined, and a negative determination causes the second-axis driving motor of the driving apparatus to stop operating.

In an embodiment of the present invention, the magnetic sensing elements are Hall effect sensing elements, and the switch circuits are Schmitt trigger circuits.

In an embodiment of the present invention, the first-axis driving motor comprises a first-axis Hall sensing and decoding chip and a first-axis motor driving chip, an output of the two switch circuits of the first-axis limit-angle detecting module is connected to the first-axis Hall sensing and decoding chip.

In an embodiment of the present invention, the first magnetic block of the first-axis potentiometer is fixed to the first axis, the first magnetic block of the second-axis potentiometer is fixed to the second axis, the second magnetic blocks of the first-axis limit-angle detecting module are fixed to the first axis, and the second magnetic blocks of the second-axis limit-angle detecting module are fixed to the second axis.

In an embodiment of the present invention, the first axis is an EL axis with changed angle of elevation and angle of depression, and the second axis is an AZ axis with a changed azimuth angle.

Accordingly, the present invention features software and hardware integration to thereby attain a multi-tier limit-angle protection mechanism, entails assessing the reliability of a potentiometer by means of two magnetic sensing elements disposed in a limit-angle detecting module, and involves integrating an analog magnetic field sensing chip (not equipped with any switch circuit) and a digital magnetic field sensing chip (equipped with a switch circuit) to thereby reduce mechanism complexity effectively, provide limit-angle protection, cut the costs incurred from parts and components, and enhance the reliability of products, thereby manifesting an inventive step over the prior art based on a conventional limit switch.

### BRIEF DESCRIPTION OF THE DRAWINGS

Objectives, features, and advantages of the present invention are hereunder illustrated with specific embodiments in conjunction with the accompanying drawings, in which:
FIG. 1 is a function block diagram of a multi-tier limit-angle protection device according to an embodiment of the present invention;
FIG. 2 (a) is a schematic view of a first-tier limit-angle protection mechanism according to an embodiment of the present invention;
FIG. 2 (b) is a waveform diagram of two magnetic sensing elements of a first-axis potentiometer according to an embodiment of the present invention;
FIG. 2 (c) is a schematic view of an output waveform of the two magnetic sensing elements of the first-axis potentiometer according to an embodiment of the present invention;
FIG. 3 (a) is a schematic view of a second-tier limit-angle protection mechanism according to an embodiment of the present invention;
FIG. 3 (b) is a schematic view of how the second-tier limit-angle protection mechanism operates according to an embodiment of the present invention;
FIG. 4 is a function block diagram of a multi-tier limit-angle protection device according to another embodiment of the present invention; and
FIG. 5 is a schematic view of the second-tier limit-angle protection mechanism according to another embodiment of the present invention.

### DETAILED DESCRIPTION OF THE PREFERRED EMBODIMENTS

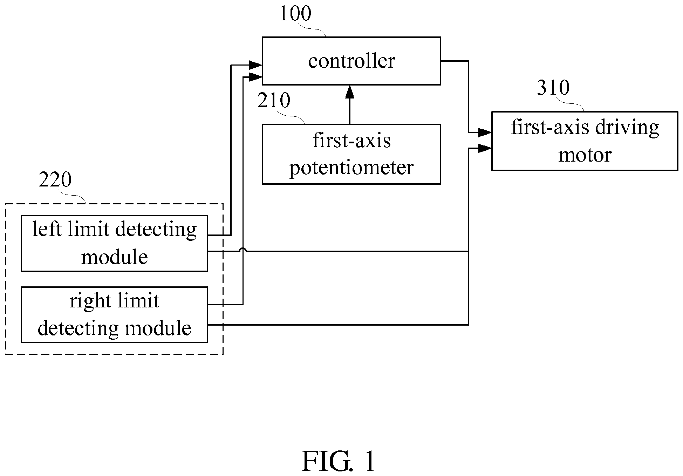

Referring to FIG. 1, there is shown a function block diagram of a multi-tier limit-angle protection device according to an embodiment of the present invention. According to the present invention, in an embodiment, a multi-tier limit-angle protection device for detecting a rotation angle about a first axis of a driving apparatus comprises a first-axis potentiometer 210, a first-axis limit-angle detecting module 220, and a controller 100. The controller 100 controls the operation of a first-axis driving motor 310 of the driving apparatus. Examples of the controller 100 include a micro control unit (MCU) with a built-in single chip. The first-axis limit-angle detecting module 220 comprises a left limit detecting module and a right limit detecting module which are also known as limit-angle detecting modules and adapted to detect a positive limit-angle and a negative limit-angle, respectively.

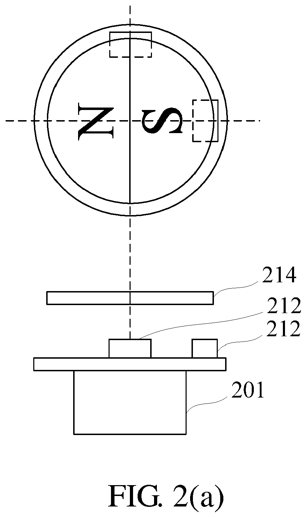

Referring to FIG. 2 (a), there is shown a schematic view of a first-tier limit-angle protection mechanism according to an embodiment of the present invention. FIG. 2 (a) further includes a side view and a top view. The first-axis potentiometer 210 comprises two magnetic sensing elements 212 and a first magnetic block 214. The two magnetic sensing elements 212 are spaced apart from each other by a first predefined angle centered at a first axis 201 of the driving apparatus. The direction of magnetization of the first magnetic block 214 is perpendicular to the first axis 201 so as for a first-axis sensing signal to be generated in accordance with the output of the variation in the strength of magnetic field induction of the first magnetic block 214 relative to the first-axis potentiometer 210.

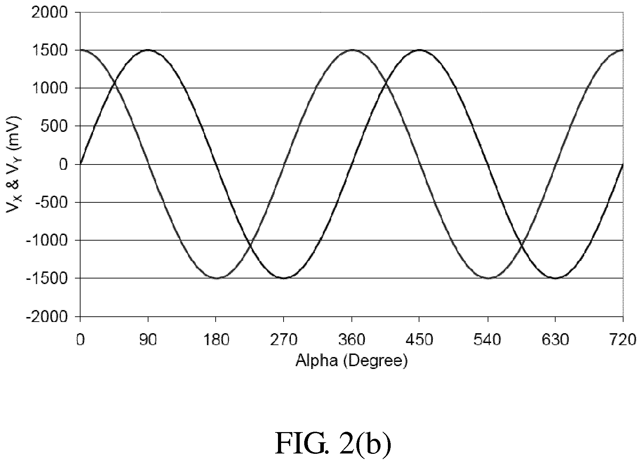

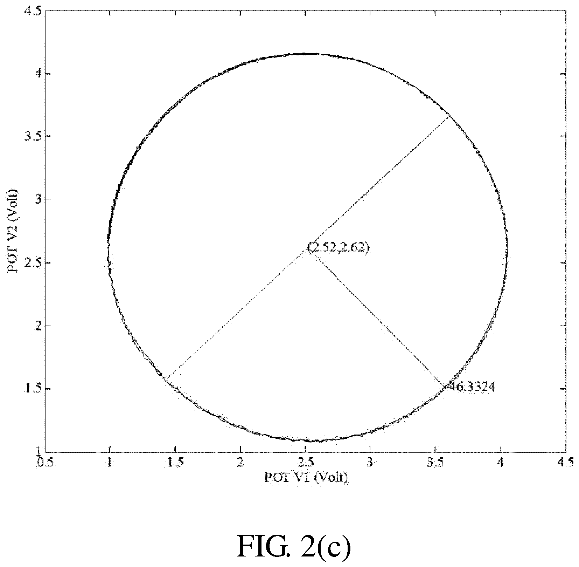

The first predefined angle is preferably 90 degrees. Referring to FIG. 2 (b), there is shown a waveform diagram of two magnetic sensing elements of a first-axis potentiometer according to an embodiment of the present invention. As shown in the diagram, the relationship between the output waveform of the two magnetic sensing elements 212 and the rotation angle about the first axis is close to that of sin/cos waves with a phase difference of 90 degrees. When the output signals from the two magnetic sensing elements 212 are seen as X axis and Y axis, respectively, their result approximates to a circle as shown in FIG. 2 (c), which is a schematic view of an output waveform of the two magnetic sensing elements of the first-axis potentiometer according to an embodiment of the present invention.

Hence, the output of the two magnetic sensing elements 212 follows a specific rule - given a cycle of 360 degrees, that is, the output voltages of the two magnetic sensing elements 212 correlates with each other. The present invention is advantageously characterized in that a table of the relationship between the output value of the two magnetic sensing elements 212 and the angle is created in advance and adapted to indicate the specific range within which the output of one of the magnetic sensing elements 212 falls by reading the voltage of the other one of the magnetic sensing elements 212. Hence, the controller 100 checks and determines whether output signals of the two magnetic sensing elements 212 are consistent with the table which is corrected in advance or whether errors in the output signals fall within an allowed range, so as to determine whether the first-axis potentiometer 210 is functioning well. In an embodiment of the present invention, the aforesaid technique is employed to determine whether hardware-related functions of a non-contact potentiometer work. If they work, the controller 100 will figure out the current rotation angle to thereby not only determine whether to stop the operation of the first-axis driving motor 310 of the driving apparatus, but also indicate a glitch in the potentiometer through a LED indicator.

In an embodiment of the present invention, the magnetic sensing elements 212 are exemplified by Hall effect sensing elements, such as linear Hall elements (LHE), and adapted to carry out non-contact sensing.

Although the multi-tier limit-angle protection device of the present invention provides the aforesaid first tier protection mechanism through the potentiometer, the demand for protection has not yet been fully met. Although it is feasible to fix the magnetic sensing elements 212 to the first axis 201 by adhesion or any other fastening means and fix the first-axis potentiometer 210 to the casing of a limit-angle protection device or any other mechanism, the odds are that the magnetic sensing elements 212 loosen after a long period of time of rotation and vibration of the first axis 201, thereby compromising the accuracy in the rotation angle figured out by the controller 100. To discover the aforesaid slack timely, the present invention further provides a second tier protection mechanism which involves checking and confirming whether the output of the first-axis potentiometer 210 is correct with the first-axis limit-angle detecting module 220.

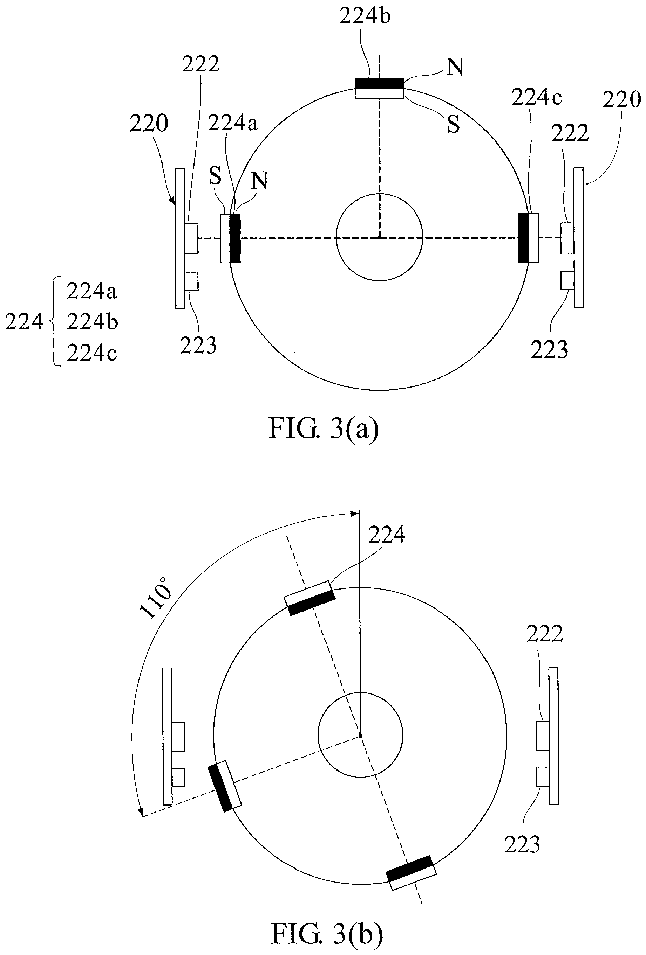

Referring to FIG. 3 (a), in an embodiment of the present invention, regarding the second tier protection mechanism, the first-axis limit-angle detecting module 220 comprises two magnetic sensing elements 222, two switch circuits 223, and three second magnetic blocks 224. The second magnetic blocks 224 are disposed at positive and negative limit angles and the zero point of the first-axis rotation angle of the driving apparatus, respectively. FIG. 3 (a) is exemplified by the positive and negative limit angles of ±90°. Moreover, the two magnetic sensing elements 222 connected to the digital switch circuits 223 are disposed at the positive and negative limit angles, respectively. One side of each of the second magnetic blocks 224 faces a corresponding one of the magnetic sensing elements 222; from the perspective of the magnetic sensing element-facing sides of the second magnetic blocks 224, one of the second magnetic blocks 224 is disposed at the zero point of the rotation angle, whereas the other two second magnetic blocks 224 are disposed at the positive and negative limit angles of the rotation angle, respectively, and have opposite magnetic poles facing the magnetic sensing elements 222. Referring to FIG. 3 (a), N-pole is distinguished from the S-pole by color. Similarly, the second magnetic blocks 224 are fixed to the first axis, whereas the first-axis limit-angle detecting module 220 is fixed to the casing of the limit-angle protection device or any other mechanism.

A first-axis confirming signal is generated as a result of magnetic field induction produced when the second magnetic blocks 224 rotate about the first axis and thus move pass the two magnetic sensing elements 222 from the front. As soon as the two magnetic sensing elements 222 produce magnetic field induction relative to the second magnetic blocks 224 passing in front of the two magnetic sensing elements 222, the two magnetic sensing elements 222 generate a first-axis confirming signal. Since the special magnetic arrangement of magnetic sensing element-facing sides of the second magnetic blocks 224 and the positions of the two magnetic sensing elements 222 are predefined, the different magnetic poles render it feasible to figure out a plurality of angles which meet the aforesaid requirement according to the positive and negative induction currents generated from the magnetic sensing elements 222, such that the controller 100 can carry out angle check and confirmation. Hence, given the first-axis limit-angle detecting module 220, when the first-axis rotation angle reaches a predefine angle, the controller 100 obtains a first-axis confirming signal to thereby check whether the first-axis sensing signal is obtained at the same angle. Referring to FIG. 3 (a), the first-axis confirming signal is obtained at 0°, 90°, 180°, 270°, and 360°, that is, at intervals of 90°.

In an embodiment of the present invention, the magnetic sensing elements 222 are exemplified by Hall effect sensing elements, such as linear Hall elements (LHE), and adapted to carry out non-contact sensing. The switch circuits 223 convert the output of the Hall effect sensing elements into a digital output. For instance, the switch circuits 223 are Schmitt trigger circuits. The Schmitt trigger circuits each have a built-in delay design for preventing the output from oscillating around the switching point between a high voltage and a low voltage. Moreover, the Schmitt trigger circuits are followed by a NPN transistor with an open collector or N-channel FET (NFET), such that it is feasible for the limit-angle detecting module to function as a device which satisfies a digital logic switch known as Hall-effect digital switch or Hall switch for enhancing its outputting capability.

The controller 100 obtains the rotation angle about the first axis at anytime in accordance with the first-axis sensing signal and obtains the first-axis confirming signal at a specific angle so as to carry out the check and confirmation. That is to say, in the situation where only the first-axis sensing signal needs to be obtained by the controller 100, the controller 100 only carries out a surveillance process for checking whether the rotation angle exceeds a limit angle. In the situation where the controller 100 has to obtain both the first-axis sensing signal and the first-axis confirming signal, the controller 100 not only carries out the surveillance process for checking whether the rotation angle exceeds the limit angle, but also carries out an angle checking process. If one of the two processes yields a result of abnormality, it will be feasible to send an alert signal and stop the operation of the first-axis driving motor of the driving apparatus.

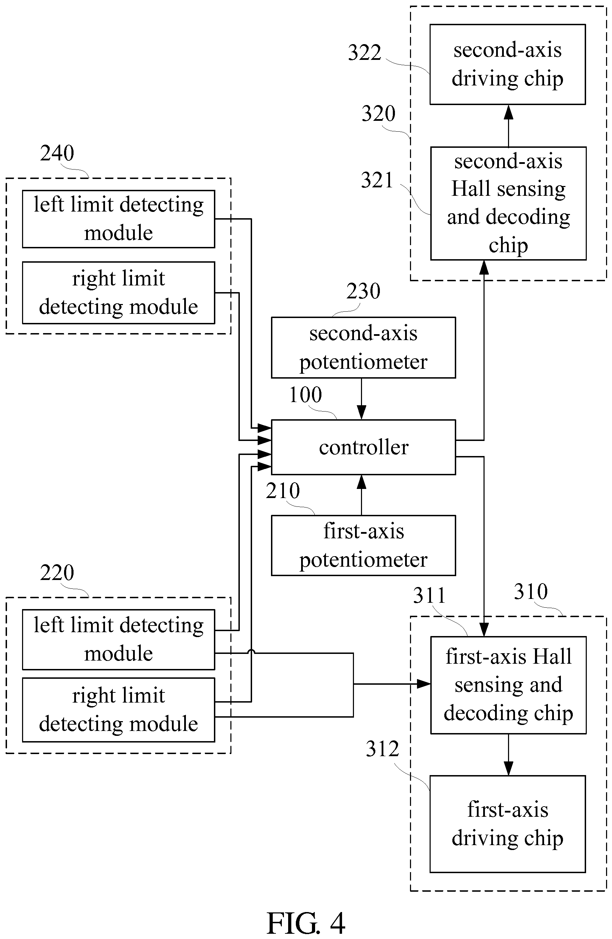

Referring to FIG. 4, there is shown a function block diagram of a multi-tier limit-angle protection device according to another embodiment of the present invention. According to the present invention, in this embodiment, a three-tier protection mechanism is further provided to ensure that a limit-angle protection mechanism will operate even if the controller 100 breaks down. The three-tier protection mechanism is restricted to a limit angle of less than 180 degrees. The output of the two switch circuits 223 of the first-axis limit-angle detecting module 220 is connected to the first-axis driving motor 310; hence, when the rotation angle about the first axis exceeds the limit angle, the voltage level variation arising from the first-axis confirming signal causes the first-axis driving motor to stop operating. The voltage level variation has another purpose: when the rotation angle about the first axis exceeds the limit angle, the second magnetic blocks 224 with their N-poles facing the magnetic sensing elements 222 move and pass the magnetic sensing elements 222 to thereby cause a change in voltage level; hence, a first-axis Hall sensing and decoding chip 311 of the first-axis driving motor 310 stops the output of signals right away, such that a first-axis motor driving chip 312 at the back end stops the output of a driving signal, thereby stopping the operation of the first-axis driving motor 310. Referring to FIG. 3 (b), the first-axis rotation angle is as large as 110 degrees, and the second magnetic blocks 224 which are initially disposed at zero have already moved and passes a left limit detecting module disposed at the left limit angle; meanwhile, the first through third tier protection mechanisms stop the operation of the first-axis driving motor 310. Even if the first tier protection mechanism fails, the second tier protection mechanism will start to function. Even if the controller 100 fails, the third tier protection mechanism will start to function. Hence, multiple tier protection mechanisms are attained.

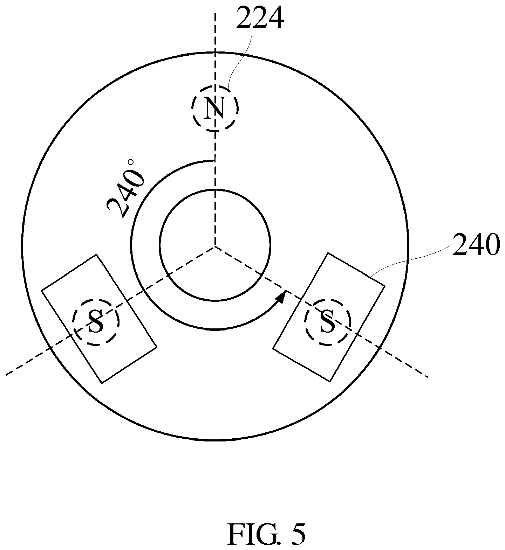

Referring to FIG. 4, with motion control usually including movement taking place in two axial directions, an embodiment of the present invention further involves applying an EL axis and an AZ axis to the second-axis protection mechanism, wherein the first axis is the EL axis with changed angle of elevation and angle of depression, and the second axis is the AZ axis with a changed azimuth angle. The second-axis protection device comprises a second-axis potentiometer 230, a second-axis limit-angle detecting module 240, a second-axis driving motor 320, a second-axis Hall sensing and decoding chip 321, and a second-axis motor driving chip 322. The aforesaid second-axis devices and modules are identical to their first-axis counterparts, except that the aforesaid second-axis devices and modules are configured to monitor the second axis. Referring to FIG. 5, the second axis (AZ axis) is monitored, though in a way slightly different from that of the first axis (EL axis), wherein the second-axis limit-angle detecting module 240 is disposed above the second magnetic blocks 224, whereas the second magnetic blocks 224 is disposed on a platform extended laterally from the second axis. Referring to FIG. 5, the limit angle is 240 degrees, for example. Since the AZ axis with a changed azimuth angle requires undergoing rotation by a large angle, the third-tier protection mechanism is preferably deployed at the EL axis with changed angle of elevation and angle of depression.

In conclusion, the embodiments of the present invention involves integrating an analog magnetic field sensing chip (not equipped with any switch circuit) and a digital magnetic field sensing chip (equipped with a switch circuit) to thereby reduce mechanism complexity effectively, provide limit-angle protection, cut the costs incurred from parts and components, and enhance the reliability of products.

Although the present invention is exemplified by a rotation mechanism to illustrate the principles and advantages of the present invention, the framework of the present invention applies to a linear sliding mechanism in practice. The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A multi-tier limit-angle protection device, adapted to detect a rotation angle about a rotation axis of a driving apparatus to thereby control operation of a driving motor of the driving apparatus, the multi-tier limit-angle protection device comprising:
a first-axis potentiometer (210) comprising first and second magnetic sensing elements (212) and a first magnetic block (214), with the first and second magnetic sensing elements (212) spaced apart by a first predefined angle centered at a first axis (201) of the driving apparatus, wherein a direction of magnetization of the first magnetic block (214) is perpendicular to the first axis (201) so as for a first-axis sensing signal to be generated in accordance with an output of a variation in a strength of magnetic field induction of the first magnetic block (214) relative to the first-axis potentiometer (210);
a first-axis limit-angle detecting module (220) comprising third and fourth magnetic sensing elements (222), first and second switch circuits (223), and three second magnetic blocks (224), with the second magnetic blocks (224) disposed at positive and negative limit angles and a zero point of the first-axis rotation angle of the driving apparatus, respectively, wherein the third and fourth magnetic sensing elements (222) connected to the first and second switch circuits (223) are disposed at the positive and negative limit angles, respectively, so as to output a plurality of first-axis confirming signals in accordance with magnetic field induction of the second magnetic blocks (224); and
a controller (100) connected to the first-axis potentiometer (210), the first-axis limit-angle detecting module (220), and the driving apparatus and adapted to receive the first-axis sensing signal so as to determine a rotation angle about the first axis (201) of the driving apparatus, such that operation of a first-axis driving motor (310) of the driving apparatus stops as soon as the rotation angle about the first axis (201) exceeds a limit angle, wherein the controller (100) receives the first-axis confirming signals, the first-axis driving motor (310) of the driving apparatus stops operating whenever an angle at which one of the first-axis confirming signals is obtained does not equal the rotation angle about the first axis (201),
wherein, from the perspective of the magnetic sensing element-facing sides of the second magnetic blocks (224), one of the second magnetic blocks (224b) which is disposed at the zero point of the rotation angle and the other two second magnetic blocks (224a, 224c) which are disposed at the positive and negative limit-angles of the rotation angle have opposite magnetic poles facing the magnetic sensing elements (222).

2. The multi-tier limit-angle protection device of claim 1, wherein an output of first and second switch circuits (223) of the first-axis limit-angle detecting module (220) is connected to the first-axis driving motor (310), wherein the limit angle of the first axis (201) of the driving apparatus is less than 180 degrees, wherein the first-axis driving motor (310) stops operating because a voltage level variation arises from the first-axis confirming signal when the rotation angle about the first axis (201) exceeds the limit angle.

3. The multi-tier limit-angle protection device of claim 2, further comprising:
a second-axis potentiometer (230) comprising fifth and sixth magnetic sensing elements and a third magnetic block, with the fifth and sixth magnetic sensing elements spaced apart by a predefined angle centered at a second axis of the driving apparatus, wherein a direction of magnetization of the third magnetic block is perpendicular to the second axis, so as for a second-axis sensing signal to be generated in accordance with an output of a variation in a strength of magnetic field induction of the third magnetic block relative to the second-axis potentiometer; and
a second-axis limit-angle detecting module (240) comprising seventh and eighth magnetic sensing elements, third and fourth switch circuits, and three fourth magnetic blocks, with the fourth magnetic blocks disposed at positive and negative limit angles and a zero point of the second-axis rotation angle of the driving apparatus, respectively, wherein the seventh and eighth magnetic sensing elements connected to the third and fourth switch circuits are disposed at the positive and negative limit angles, respectively, so as to output a plurality of second-axis confirming signals in accordance with magnetic field induction of the fourth magnetic blocks,
wherein the controller (100) is connected to the second-axis potentiometer, the second-axis limit-angle detecting module, and the driving apparatus and adapted to receive the second-axis sensing signal so as to determine a rotation angle about the second axis of the driving apparatus, such that operation of a second-axis driving motor of the driving apparatus stops as soon as the rotation angle about the second axis exceeds a limit angle, wherein the controller (100) receives the second-axis confirming signals, the first-axis driving motor (310) of the driving apparatus stops operating whenever an angle at which one of the first-axis confirming signals is obtained does not equal the rotation angle about the first axis (201).

4. The multi-tier limit-angle protection device of claim 3, wherein the first and second magnetic sensing elements (212) are Hall effect sensing elements, and the first and second switch circuits (223) are Schmitt trigger circuits.

5. The multi-tier limit-angle protection device of claim 4, wherein the first-axis driving motor (310) comprises a first-axis Hall sensing and decoding chip and a first-axis motor driving chip, an output of the first and second switch circuits (223) of the first-axis limit-angle detecting module (220) is connected to the first-axis Hall sensing and decoding chip.

6. The multi-tier limit-angle protection device of claim 5, wherein the first magnetic block (214) of the first-axis potentiometer (210) is fixed to the first axis (201), the third magnetic block of the second-axis potentiometer (230) is fixed to the second axis, the second magnetic blocks of the first-axis limit-angle detecting module (220) are fixed to the first axis (201), and the fourth magnetic blocks of the second-axis limit-angle detecting module (240) are fixed to the second axis.

7. The multi-tier limit-angle protection device of claim 6, wherein the first axis (201) is an EL axis with changed angle of elevation and angle of depression, and the second axis is an AZ axis with a changed azimuth angle.

8. The multi-tier limit-angle protection device of claim 7, wherein the first predefined angle is 90 degrees.

## Patentansprüche

1. Mehrstufige Grenzwinkelschutzvorrichtung, die angepasst ist, einen Drehwinkel um eine Drehachse einer Antriebsvorrichtung zu erfassen, um dadurch den Betrieb eines Antriebsmotors der Antriebsvorrichtung zu steuern, wobei die mehrstufige Grenzwinkelschutzvorrichtung umfasst:
ein Erstachsen-Potentiometer (210) mit einem ersten und einem zweiten Magnetabtastelement (212) und einem ersten Magnetblock (214), wobei das erste und das zweite Magnetabtastelement (212) um einen ersten vordefinierten Winkel, der an einer ersten Achse (201) der Antriebsvorrichtung zentriert ist, beabstandet sind, wobei eine Magnetisierungsrichtung des ersten Magnetblocks (214) senkrecht zu der ersten Achse (201) ist, so dass ein Erstachsen-Abtastsignal in Übereinstimmung mit einer Stärkevariation der Magnetfeldinduktion des ersten Magnetblocks (214) relativ zu dem Erstachsen-Potentiometer (210) erzeugt wird;
ein Erstachsen-Grenzwinkelerfassungsmodul (220) mit dritten und vierten Magnetabtastelementen (222), ersten und zweiten Schaltkreisen (223) und drei zweiten Magnetblöcken (224), wobei die zweiten Magnetblöcke (224) an positiven und negativen Grenzwinkeln bzw. einem Nullpunkt des Drehwinkels der ersten Achse der Antriebsvorrichtung angeordnet sind, wobei das dritte und das vierte Magnetabtastelemente (222), die mit den ersten und zweiten Schaltkreisen (223) verbunden sind, an positiven bzw. negativen Grenzwinkeln angeordnet sind, um eine Mehrzahl von Erstachsen-Bestätigungssignalen in Übereinstimmung mit der Magnetfeldinduktion der zweiten Magnetblöcke (224) abzugeben; und
eine Steuerung (100), die mit dem Erstachsen-Potentiometer (210), dem Erstachsen-Grenzwinkelerfassungsmodul (220) und der Antriebsvorrichtung verbunden ist und angepasst ist, das erste Achsenabtastsignal zu empfangen, um einen Drehwinkel um die erste Achse (201) der Antriebsvorrichtung zu bestimmen, so dass der Betrieb eines Erstachsen-Antriebsmotors (310) der Antriebsvorrichtung stoppt, sobald der Drehwinkel um die erste Achse (201) einen Grenzwinkel überschreitet, wobei die Steuerung (100) die Erstachsen-Bestätigungssignale empfängt, der Erstachsen-Antriebsmotor (310) der Antriebsvorrichtung den Betrieb stoppt, sobald ein Winkel, bei dem eines der Erstachsen-Bestätigungssignale erhalten wird, nicht gleich dem Drehwinkel um die erste Achse ist (201),
wobei aus der Perspektive der dem Magnetabtastelement zugewandten Seiten der zweiten Magnetblöcke (224), einer der zweiten Magnetblöcke (224b), der am Nullpunkt des Drehwinkels angeordnet ist, und die anderen beiden zweiten Magnetblöcke (224a, 224c), die an den positiven und negativen Grenzwinkeln des Drehwinkels angeordnet sind, entgegengesetzte Magnetpole aufweisen, die den Magnetabtastelementen (222) gegenüberliegen.

2. Mehrstufige Grenzwinkelschutzvorrichtung nach Anspruch 1, wobei ein Ausgang des ersten und des zweiten Schaltkreises (223) des Erstachsen-Grenzwinkelerfassungsmoduls (220) mit dem Erstachsen-Antriebsmotor verbunden ist (310), wobei der Grenzwinkel der ersten Achse (201) der Antriebsvorrichtung kleiner als 180 Grad ist, wobei der Erstachsen-Antriebsmotor (310) aufhört zu arbeiten, weil eine Spannungspegelschwankung von dem Erstachsen-Bestätigungssignal auftritt, wenn der Drehwinkel um die erste Achse (201) den Grenzwinkel überschreitet.

3. Mehrstufige Grenzwinkelschutzvorrichtung nach Anspruch 2, ferner umfassend:
ein Zweitachsen-Potentiometer (230), das ein fünftes und ein sechstes Magnetabtastelement und einen dritten Magnetblock umfasst, wobei das fünfte und das sechste Magnetabtastelemente um einen vordefinierten Winkel beabstandet sind, der an einer zweiten Achse der Antriebsvorrichtung zentriert ist, wobei eine Magnetisierungsrichtung des dritten Magnetblocks senkrecht zu der zweiten Achse ist, so dass ein Zweitachsen-Abtastsignal in Übereinstimmung mit einer Stärkevariation der Magnetfeldinduktion des dritten Magnetblocks relativ zu der Zweitachsen-Potentiometer erzeugt wird; und
ein Zweitachsen-Grenzwinkelerfassungsmodul (240) mit siebten und achten Magneterfassungselementen, dritten und vierten Schaltkreisen und drei vierten Magnetblöcken, wobei die vierten Magnetblöcke jeweils an positiven und negativen Grenzwinkeln und an einem Nullpunkt des Zweitachsen-Rotationswinkels der Antriebsvorrichtung angeordnet sind, wobei das siebte und das achte Magnetabtastelemente, die mit den dritten und vierten Schaltkreisen verbunden sind, jeweils an den positiven und negativen Grenzwinkeln angeordnet sind, um eine Vielzahl von Zweitachsen-Bestätigungssignalen in Übereinstimmung mit der Magnetfeldinduktion der vierten Magnetblöcke abzugeben,
wobei die Steuerung (100) mit dem Zweitachsen-Potentiometer, dem Zweitachsen-Grenzwinkelerfassungsmodul und der Antriebsvorrichtung verbunden ist und angepasst ist, das Zweitachsen-Abtastsignal zu empfangen, um einen Rotationswinkel um die zweite Achse der Antriebsvorrichtung zu bestimmen, so dass der Betrieb eines Zweitachsen-Antriebsmotors der Antriebsvorrichtung aufhört, sobald der Drehwinkel um die zweite Achse einen Grenzwinkel überschreitet, wobei die Steuerung (100) die Zweitachsen-Bestätigungssignale empfängt und der Erstachsen-Antriebsmotor (310) der Antriebsvorrichtung aufhört zu arbeiten, sobald ein Winkel, bei dem eines der Erstachsen-Bestätigungssignale erhalten wird, nicht gleich dem Rotationswinkel um die erste Achse (201) ist.

4. Mehrstufige Grenzwinkelschutzvorrichtung nach Anspruch 3, wobei das erste und das zweite Magnetabtastelement (212) Hall-Effekt-Abtastelemente sind und der erste und der zweite Schaltkreis (223) Schmitt-Trigger-Schalkreise sind.

5. Mehrstufige Grenzwinkelschutzvorrichtung nach Anspruch 4, wobei der Erstachsen-Antriebsmotor (310) einen Erstachsen-Hall-Abtast- und Decodierungschip und einen Erstachsen-Motor-Antriebschip umfasst, und ein Ausgang des ersten und des zweiten Schaltkreises (223) des Erstachsen-Grenzwinkelerfassungsmoduls (220) mit dem Erstachsen-Hall-Abtast- und - Decodierungschip verbunden ist.

6. Mehrstufige Grenzwinkelschutzvorrichtung nach Anspruch 5, wobei der erste Magnetblock (214) des Erstachsen-Potentiometers (210) an der ersten Achse (201) befestigt ist, der dritte Magnetblock des Zweitachsen-Potentiometer (230) an der zweiten Achse befestigt ist, die zweiten Magnetblöcke des Erstachsen-Grenzwinkelerfassungsmoduls (220) an der ersten Achse (201) befestigt sind und die vierten Magnetblöcke der Zweitachsen-Grenzwinkelerfassungsmoduls (240) an der zweiten Achse befestigt sind.

7. Mehrstufige Grenzwinkelschutzvorrichtung nach Anspruch 6, wobei die erste Achse (201) eine EL-Achse mit geändertem Elevationswinkel und Depressionswinkel ist und die zweite Achse eine AZ-Achse mit geänderten Azimutwinkel ist.

8. Mehrstufige Grenzwinkelschutzvorrichtung nach Anspruch 7, wobei der erste vordefinierte Winkel 90 Grad beträgt.

## Revendications

1. Dispositif de protection d'angle limite multiniveau, adapté pour détecter un angle de rotation autour d'un axe de rotation d'un appareil d'entraînement pour commander ainsi le fonctionnement d'un moteur d'entraînement de l'appareil d'entraînement, le dispositif de protection d'angle limite multiniveau comprenant:
un potentiomètre du premier axe (210) comprenant un premier et un second élément de détection magnétique (212) et un premier bloc magnétique (214), le premier et le second élément de détection magnétique (212) étant espacés d'un premier angle prédéfini centré sur un premier axe (201) de l'appareil d'entraînement, dans lequel une direction d'aimantation du premier bloc magnétique (214) est perpendiculaire au premier axe (201) de manière à générer un signal de détection du premier axe en fonction d'une variation de la force d'induction du champ magnétique du premier bloc magnétique (214) par rapport au potentiomètre du premier axe (210);
un module de détection d'angle limite du premier axe (220) comprenant un troisième et un quatrième élément de détection magnétique (222), un premier et un second circuit de commutation (223) et trois seconds blocs magnétiques (224), les seconds blocs magnétiques étant disposés aux angles limites positif et négatif et à un point zéro de l'angle de rotation du premier axe de l'appareil d'entraînement, respectivement, où le troisième et le quatrième élément de détection magnétique (222), connectés au premier et au second circuit de commutation (223), sont disposés aux angles limites positif et négatif, respectivement, de façon à produire une pluralité de signaux de confirmation du premier axe en fonction de l'induction du champ magnétique des seconds blocs magnétiques (224); et
un contrôleur (100) connecté au potentiomètre du premier axe (210), au module de détection d'angle limite du premier axe (220) et à l'appareil d'entraînement et adapté pour recevoir le signal de détection du premier axe de manière à déterminer un angle de rotation autour du premier axe (201) de l'appareil d'entraînement, de sorte que le fonctionnement d'un moteur d'entraînement du premier axe (310) de l'appareil d'entraînement s'arrête dès que l'angle de rotation autour du premier axe (201) dépasse un angle limite, où le contrôleur (100) reçoit les signaux de confirmation du premier axe, le moteur d'entraînement du premier axe (310) de l'appareil d'entraînement cesse de fonctionner chaque fois qu'un angle pour lequel l'un des signaux de confirmation du premier axe est obtenu ne correspond pas à l'angle de rotation autour du premier axe (201),
où, du point de vue des côtés faisant face aux éléments de détection magnétiques des seconds blocs magnétiques (224), l'un des seconds blocs magnétiques (224b) est disposé au point zéro de l'angle de rotation et les deux autres seconds blocs magnétiques (224a, 224c), qui sont disposés aux angles limites positif et négatif de l'angle de rotation, ont des pôles magnétiques opposés en regard des éléments de détection magnétiques (222).

2. Dispositif de protection d'angle limite multiniveau selon la revendication 1, où une sortie du premier et du second circuit de commutation (223) du module de détection d'angle limite du premier axe (220) est connectée au moteur d'entraînement du premier axe (310), l'angle limite du premier axe (201) de l'appareil d'entraînement étant inférieur à 180 degrés, le moteur d'entraînement du premier axe (310) cessant de fonctionner parce qu'une variation de niveau de tension provient du signal de confirmation du premier axe lorsque l'angle de rotation autour du premier axe (201) dépasse l'angle limite.

3. Dispositif de protection d'angle limite multiniveau selon la revendication 2, comprenant en outre :
un potentiomètre du second axe (230) comprenant un cinquième et un sixième élément de détection magnétique et un troisième bloc magnétique, le cinquième et le sixième élément de détection magnétiques étant espacés d'un angle prédéfini centré sur un second axe de l'appareil d'entraînement, où une direction d'aimantation du troisième bloc magnétique est perpendiculaire au second axe, de sorte qu'un signal de détection du second axe soit généré en fonction d'une variation de l'intensité du champ magnétique induit du troisième bloc magnétique par rapport au potentiomètre du second axe; et
un module de détection d'angle limite du second axe (240) comprenant un septième et un huitième élément de détection magnétique, un troisième et un quatrième circuit de commutation et trois quatrièmes blocs magnétiques, les quatrièmes blocs magnétiques étant disposés à des angles limites positifs et négatifs et à un point zéro de l'angle de rotation du second axe de l'appareil d'entraînement, respectivement, où le septième et le huitième élément de détection magnétique connectés au troisième et au quatrième circuit de commutation sont respectivement disposés aux angles limites positif et négatif, de manière à émettre une pluralité de signaux de confirmation du second axe en fonction de l'induction du champ magnétique des quatrièmes blocs magnétiques,
où le contrôleur (100) est connecté au potentiomètre du second axe, au module de détection d'angle limite du second axe et à l'appareil d'entraînement et est adapté pour recevoir le signal de détection du second axe de manière à déterminer un angle de rotation autour du second axe de l'appareil d'entraînement, de sorte que le fonctionnement d'un moteur d'entraînement du second axe de l'appareil d'entraînement s'arrête dès que l'angle de rotation autour du second axe dépasse un angle limite, où le contrôleur (100) reçoit les signaux de confirmation du second axe, le moteur d'entraînement du premier axe (310) de l'appareil d'entraînement cesse de fonctionner chaque fois qu'un angle pour lequel l'un des signaux de confirmation du premier axe est obtenu n'est pas égal à l'angle de rotation autour du premier axe (201).

4. Dispositif de protection d'angle limite multiniveau selon la revendication 3, dans lequel le premier et le second élément de détection magnétique (212) sont des éléments de détection à effet Hall, et le premier et le second circuit de commutation (223) sont des triggers de Schmitt.

5. Dispositif de protection d'angle limite multiniveau selon la revendication 4, dans lequel le moteur d'entraînement du premier axe (310) comprend une puce de détection et de décodage de Hall du premier axe et une puce d'entraînement du premier axe, une sortie du premier et du second circuit de commutation (223) du module de détection d'angle limite du premier axe (220) est connectée à la puce de détection et de décodage de Hall du premier axe.

6. Dispositif de protection d'angle limite multiniveau selon la revendication 5, dans lequel le premier bloc magnétique (214) du potentiomètre du premier axe (210) est fixé au premier axe (201), le troisième bloc magnétique du potentiomètre du second axe (230) est fixé au second axe, les seconds blocs magnétiques du module de détection d'angle limite du premier axe (220) sont fixés sur le premier axe (201) et les quatrièmes blocs magnétiques du module de détection d'angle limite du second axe (240) sont fixés au second axe.

7. Dispositif de protection d'angle limite multiniveau selon la revendication 6, où le premier axe (201) est un axe EL avec un angle d'élévation et un angle de dépression modifiés, et le second axe est un axe AZ avec un angle d'azimut modifié.

8. Dispositif de protection d'angle limite multiniveau selon la revendication 7, dans lequel le premier angle prédéfini est de 90 degrés.
